# EUROPEAN PATENT APPLICATION

(11) **EP 3 741 678 A1**
(43) Date of publication of application: **25.11.2020**
(21) Application number: 19175694.9
(22) Date of filing: 21.05.2019
(51) Int. Cl.: B64D 13/00, F16K 1/20, F16K 31/52

(54) **REGULATING VALVE FOR A HEAT EXCHANGER SYSTEM OF AN AIRCRAFT PROPULSION SYSTEM**

(71) Applicant: Airbus SAS, 31700 Blagnac (FR); Airbus Operations (S.A.S.), 31060 Toulouse Cedex 9 (FR); Airbus Operations S.L., 28906 Madrid (ES)
(72) Inventor: MEDDA, Bruno, 31060 TOULOUSE (FR); MARTINO-GONZALEZ, Esteban, 28906 GETAFE-MADRID (ES); STEVENS, Thomas, 31060 TOULOUSE (FR); CAYSSIALS, Julien, 31060 TOULOUSE (FR); PRIETO PADILLA, Juan Tomas, 28906 GETAFE-MADRID (ES); SOULIE, Adeline, 31060 TOULOUSE (FR); POIRIER, Didier, 31700 BLAGNAC Cedex (FR); PINAULT, Pierre-Alain, 31060 TOULOUSE (FR); BARRON VEGA, Diego, 31700 BLAGNAC (FR)
(74) Representative: Cabinet Le Guen Maillet

(57) **Abstract**

The invention relates to a regulating valve (318) for a heat exchanger system of a propulsion system comprising a turbojet with a fan duct, and the heat exchanger system comprising a supply pipe which bleeds cold air from the fan duct, and wherein the regulating valve (318) has a front side (404) and a back side (406) and includes an open frame (402) which delimits a window (401) and is set in position in front of the supply pipe, two flaps (410a-b) rotatably mounted on the open frame (402) around a same rotation axis (412) located at the front side (404) between a closed position and an open position, a mechanism (420) linked to the flaps (410a-b) and mobile between a first position and a second position, and wherein the mechanism (420) moves the flaps (410a-b) from the closed position to the open position when it moves from the first position to the second position, and an actuator acting on the mechanism (420) to move it from the first position to the second position and vice versa.

The specific embodiment of the cold regulating valve reduces the necessary space to implement it.

## Description

### TECHNICAL FIELD

The present invention relates to a regulating valve for a heat exchanger system of an aircraft propulsion system, a heat exchanger system of an aircraft propulsion system including such regulating valve, an aircraft propulsion system including such a heat exchanger system, together with an aircraft including at least one such propulsion system.

### PRIOR ART

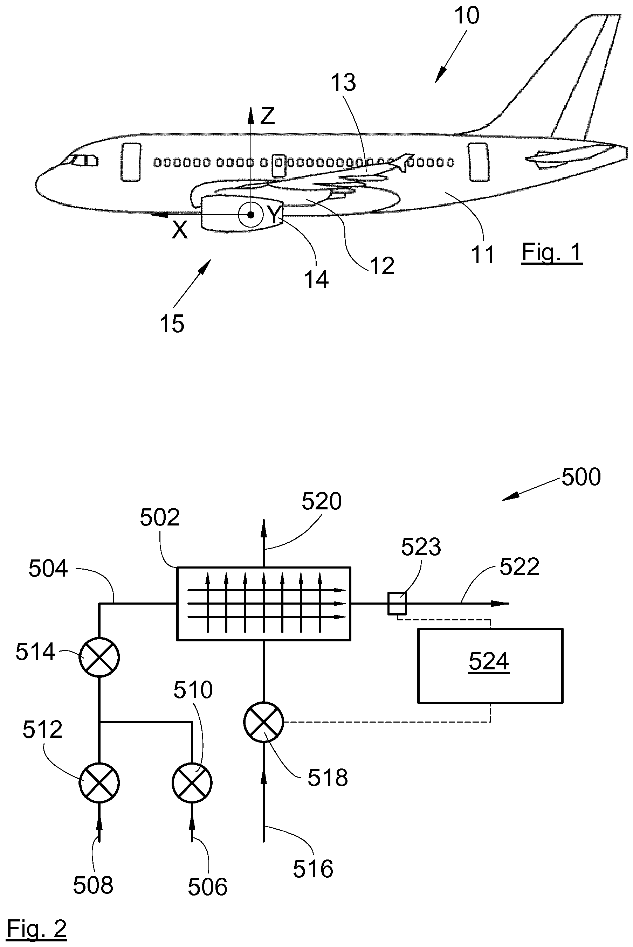

In order to supply hot air whether for a system of air, conditioned so as to guarantee the comfort of the passengers, or for a de-icing system for de-icing the outside surfaces of an aircraft, this system includes a heat exchanger system, which is schematically illustrated in Figure 2.

The heat exchanger system 500 is disposed in the vicinity of the turbojet of the aircraft and it includes a heat exchanger 502.

The heat exchanger 502 is supplied with hot air through a first supply pipe 504, which bleeds hot air from the high pressure stage 506 or at the intermediate pressure stage 508 of the turbojet, respectively through a first valve 510 and a second valve 512. The first supply pipe 504 also includes a hot regulating valve 514, which enables regulation of the pressure at the inlet of the heat exchanger 502.

The heat exchanger 502 is supplied with cold air by a second supply pipe 516, which bleeds cold air from the fan duct of the turbojet. The second supply pipe 516 also includes a cold regulating valve 518, which regulates the quantity of cold air introduced into the heat exchanger 502 so as to regulate the temperature of the hot air exiting the heat exchanger 502.

After having passed through the heat exchanger 502, the cold air, which has been heated, is expelled to the outside through an evacuation pipe 520.

After having passed through the heat exchanger 502, the hot air, which has been cooled, is directed through a transfer pipe 522 to the air management systems like the air conditioning system or the de-icing system.

The heat exchanger system 500 includes a temperature sensor 523, which measures the temperature of the hot air exiting the heat exchanger 502 and a control unit 524, which controls the valves according to the temperature measured by the temperature sensor 523 and the temperature desired for the hot air exiting the heat exchanger 502.

The heat exchanger 502 is with cross flow, that is to say that the hot air and the cold air enter the heat exchanger 502 and exit the heat exchanger 502 along two globally perpendicular directions.

Although such a heat exchanger system 500 gives good results, the cold regulating valve 518 is commonly a single flat plate which is rotatably mounted on the structure of the turbojet in the fan duct and is shifted from an open position to a closed position by a rotating motor fixed in the fan duct along the rotation axis.

In order to reduce the fuel consumption, the trend is to increase the bypass ratio and, as a consequence, the diameter of the turbojet. The turbojet has to be installed closer to the wing and the space allocated for the components is reduced.

It is therefore necessary to find a more compact cold regulating valve.

### DESCRIPTION OF THE INVENTION

An aim of the present invention is to propose a cold regulating valve for a heat exchanger system of an aircraft propulsion system which is more compact.

To that effect, a regulating valve for a heat exchanger system of an aircraft propulsion system is proposed, said propulsion system comprising a turbojet with a fan duct, and the heat exchanger system comprising a second supply pipe which bleeds cold air from the fan duct, and wherein the regulating valve has a front side intended to be oriented towards a front of the fan duct, and a back side intended to be oriented towards the second supply pipe and includes:
- an open frame which delimits a window and is intended to be set in position in front of the second supply pipe,
- two flaps extending between a proximal end and a distal end, wherein the proximal end of each flap is rotatably mounted on the open frame around a same rotation axis located at the front side, wherein the flaps are mobile in rotation between a closed position in which each flap closes half of the window and an open position in which each flap is retracted in order to open half of the window,

- a mechanism linked to the flaps, wherein the mechanism is mobile between a first position and a second position, and wherein the mechanism moves the flaps from the closed position to the open position when it moves from the first position to the second position and vice et versa, and
- an actuator acting on the mechanism to move it from the first position to the second position and vice versa.

The specific embodiment of the cold regulating valve reduces the necessary space to implement it.

Advantageously, the mechanism is located at the back of the flaps and between the flaps in the open position.

Advantageously, the regulating valve comprises an aerodynamic element fixed to the open frame through the window and just after trailing edges of the flaps in the open position.

Advantageously, between the proximal end and the distal end, each flap presents an external face in contact with the cold air flow of the fan duct, and the external face is convex.

Advantageously, the mechanism comprises:
- a rod linked to the actuator and parallel to the rotation axis, wherein the rod is mobile in translation with respect to the frame according to a direction of translation parallel to a direction extending between the front side and the back side, and
- for each flap, at least one arm, wherein a first extremity of the arm is rotatably mounted on the flap around a first articulation axis parallel to the rotation axis and wherein a second extremity of the arm is rotatably mounted on the rod around a second articulation axis parallel to the rotation axis.

The invention also proposes a heat exchanger system of an aircraft propulsion system, said propulsion system comprising a turbojet with a fan duct, and said heat exchanger system comprising a heat exchanger and a second supply pipe which is intended to bleed cold air to the heat exchanger from the fan duct through a regulation valve according to one of the preceding variants.

The invention also proposes an aircraft propulsion system comprising a turbojet with a fan duct and a heat exchanger system according to the preceding variant.

The invention also proposes an aircraft including at least one propulsion system according to the preceding variant.

### BRIEF DESCRIPTION OF THE DRAWINGS

The aforementioned characteristics of the invention, as well as others, will emerge more clearly on reading the following description of an embodiment example, said description being made in relation to the attached drawings, among which:
Fig. 1 is a side view of an aircraft including a heat exchanger system according to the invention,
Fig. 2 is a schematic illustration of a heat exchanger system,
Fig. 3 shows a side view of the heat exchanger system according to the invention in its environment,
Fig. 4 is a perspective view of a cold regulating valve according to the invention,
Fig. 5 is a section according to the plane III of the cold regulating valve of Fig. 3, where the cold regulating valve is in a closed position, and
Fig. 6 is the same view than Fig. 4 in an open position of the cold regulating valve.

### DETAILED DESCRIPTION OF EMBODIMENTS

In the description that follows, the terms relating to a position are taken with reference to an aircraft in normal flight position, that is to say as it is illustrated on Fig. 1, and the positions "forward", "front", "rear" and "aft" are taken in relation to the front and rear of the turbojet.

In the description that follows, and by convention, X is the longitudinal axis of the turbojet, which is parallel to the longitudinal axis of the aircraft, Y is the transversal axis, which is horizontal when the aircraft is on the ground, and Z is the vertical axis, which is vertical when the aircraft is on the ground, these three directions X, Y and Z being orthogonal to each other.

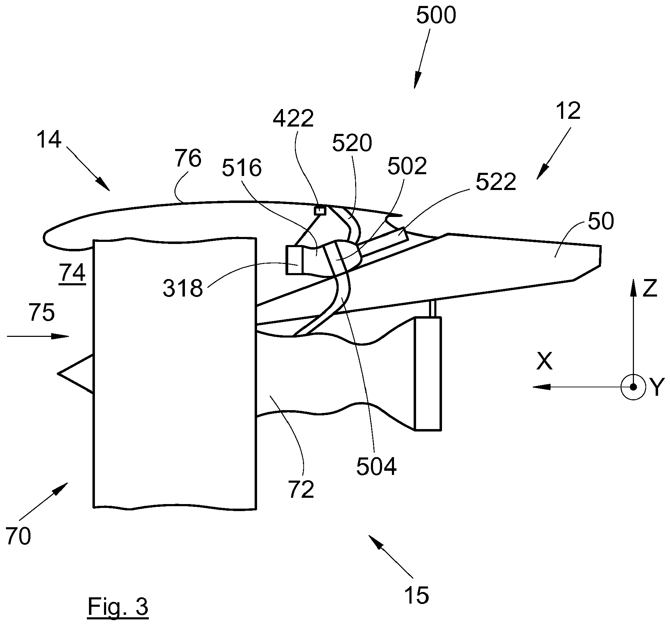

Fig. 1 shows an aircraft 10, which includes a fuselage 11, on either side of which a wing 13 is fastened that supports at least one propulsion system 15, which includes a pylon 12 and a turbojet 70 (Fig. 3).

Fig. 3 shows a heat exchanger system 500 in its environment.

The pylon 12 is fastened under the wing 13 and supports the turbojet 70, which conventionally includes compression stages 72 and a fan duct 74. The pylon 12 includes a primary structure 50, which is fastened at its upper part to the structure of the wing 13 and which supports the turbojet through different fastening points. The primary structure 50 is disposed above the turbojet 70 and its front edge is attached to the turbojet 70 inside the fan duct 74.

The aircraft 10 includes an air management system like for example an air conditioning system and/or a de-icing system.

The propulsion system 15 also includes a nacelle 14, which includes a fairing 76, which surrounds the turbojet 70, and an aerodynamic fairing of the pylon 12, which surrounds the primary structure 50.

Fig. 2 shows a heat exchanger system 500 of the propulsion system 15, which is located on the primary structure 50 and in the fan duct 74. The heat exchanger system 500 has the same architecture than the heat exchanger system 500 of the prior art but the cold regulating valve is different and will be described in details below.

The heat exchanger system 500 includes the same elements as the heat exchanger system described for the prior art. The cold regulating valve of the invention is described for this specific embodiment of the heat exchanger system 500 but it can also be used for other type of heat exchanger system 500, when the cold regulating valve is in the fan duct 74.

In the embodiment of Fig. 3, the heat exchanger system 500 includes a heat exchanger 502, which is fastened above the primary structure 50 and which includes a supply pipe 504 which supplies the heat exchanger 502 with hot air from the compression stages 72. For clarity of Fig. 3, the first valve, the second valve and the hot regulating valve are not shown.

The heat exchanger 502 is supplied with cold air by a second supply pipe 516 which bleeds cold air from the fan duct 74 through the cold regulation valve 318 according to the invention, which regulates the quantity of cold air introduced into the heat exchanger 502 so as to regulate the temperature of the hot air exiting the heat exchanger 502.

After having passed through the heat exchanger 502, the cold air, which has been heated, is expelled to the outside through an evacuation pipe 520 through the fairing 76.

After having passed through the heat exchanger 502, the hot air, which has been cooled, is directed through a transfer pipe 522 to the air management systems like the air conditioning system or the de-icing system.

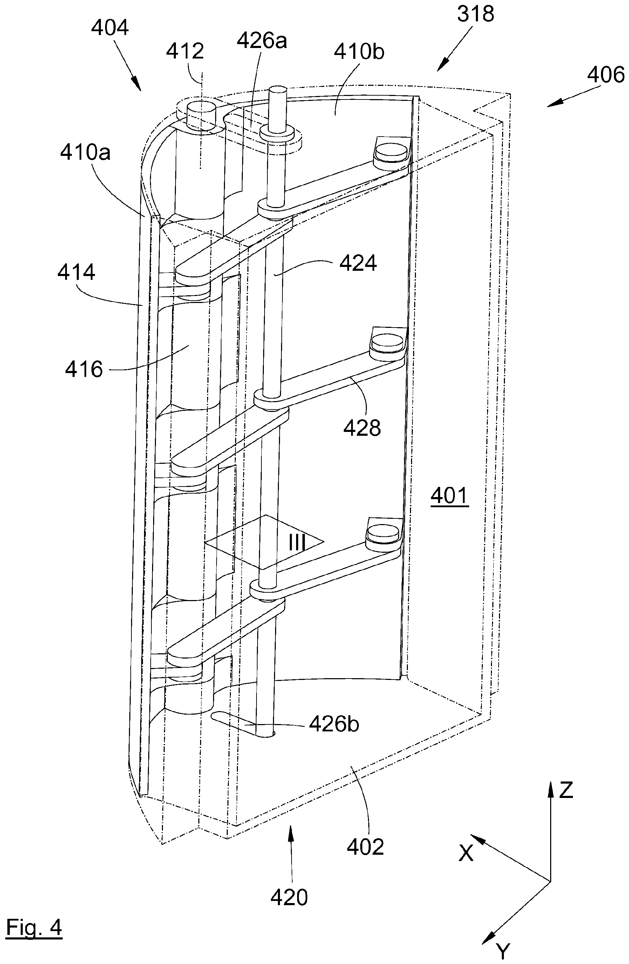

Figs 4 to 6 show the cold regulating valve 318 in the fan duct 74. The arrows 75 of Figs 3, 5 and 6 represent the cold air flow in the fan duct 74.

The cold regulating valve 318 includes an open frame 402 which is set in position in front of the second supply pipe 516. The open frame 402 delimits a window 401. The walls of the second supply pipe 516 extend the walls of the open frame 402 in order that the cold air of the fan duct 74 which flows through the window 401 arrives in the second supply pipe 516.

The cold regulating valve 318 has a front side 404 oriented towards the front of the fan duct 74, i.e. the front of the turbojet 70, and a back side 406 oriented towards the rear of the fan duct 74, i.e. the second supply pipe 516.

The cold regulating valve 318 includes also two flaps 410a-b which are seen in transparency through the open frame 402 in Fig. 4. Each flap 410a-b extends between a proximal end and a distal end.

The proximal end of each flap 410a-b is rotatably mounted on the open frame 402 around a same rotation axis 412 which is located at the front side 404.

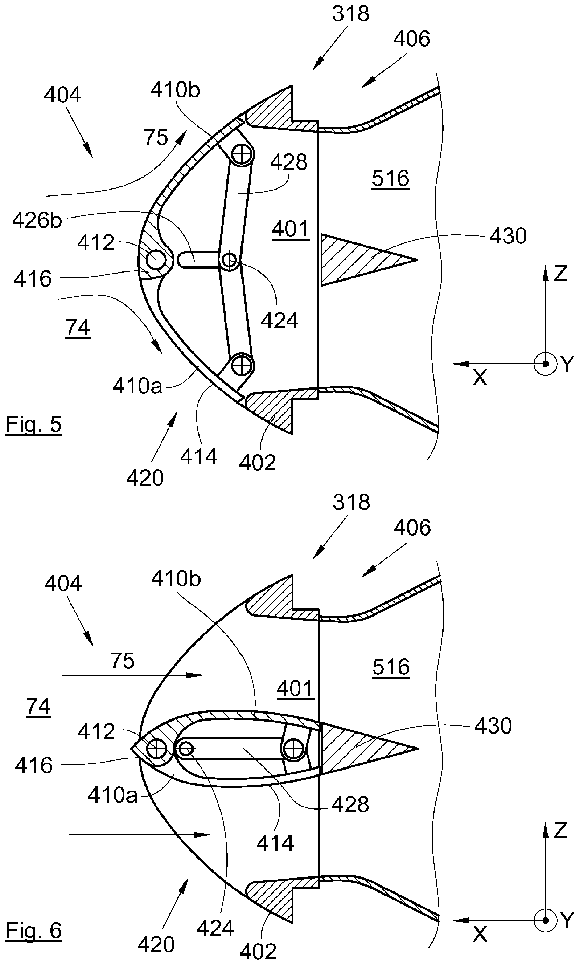

The flaps 410a-b are mobile in rotation between a closed position (Fig. 5) in which each flap 410a-b closes half of the window 401, and an open position (Fig. 6) in which each flap 410a-b is retracted in order to open half of the window 401. Intermediate positions are possible between the open position and the closed position.

In the closed position, the distal ends of the flaps 410a-b are away one from the other to cover the window 401. In the open position, the distal ends of the flaps 410a-b are closed one of the other to free the window 401.

The cold regulating valve 318 includes also a mechanism 420 linked to the flaps 410a-b and an actuator 422 linked to the mechanism 420 schematically shown on Fig. 3. The mechanism 420 is mobile between a first position corresponding to the closed position of the flaps 410a-b and a second position corresponding to the open position of the flaps 410a-b. The mechanism 420 moves the flaps 410a-b from the closed position to the open position when it moves from the first position to the second position and vice versa.

The actuator 422 acts on the mechanism 420 to move it from the first position to the second position and vice versa.

The frame 402 can be fixed directly to the second supply pipe 516 thanks to known fixation means and it is no more fixed to the structure of the turbojet 70. The architecture of the cold regulating valve 318 saves space.

The mechanism 420 is located at the back of the flaps 410a-b and between the flaps 410a-b in the open position. The air flow in the fan duct 74 is therefore not affected by the mechanism 420.

The propulsion system 15 includes a control unit, which controls the valves and the actuator 422 according to the temperature measured by the temperature sensor 523 and the temperature desired for the hot air exiting the heat exchanger 502.

Between the proximal end and the distal end, each flap 410a-b presents an external face in contact with the cold air flow 75 of the fan duct 74. The external face 414 is convex to reduce the pressure drops. The convex form of the flaps 410a-b allows the integration of the cold regulating valve 318 as a leading edge of a wall present in the fan duct 74 to realize a bifurcation.

In the open position, the external faces of the two flaps 410a-b form an aerodynamic profile.

The rotation of each flap 410a-b is realized thanks to a set of several hinges 416 distributed along the rotation axis 412. The hinges of one of the flaps 410a alternate with the hinges of the other flap 410b.

In the embodiment of Figs 4 to 6, the mechanism 420 comprises a rod 424 linked to the actuator 422 and parallel to the rotation axis 412. The rod 424 is mobile in translation with respect to the frame 402 according to a direction of translation parallel to a direction extending between the front side 404 and the back side 406, i.e. a direction perpendicular to the plane of the window 401.

Here the translation is managed by two elongated holes 426a-b realized in the frame 402 in which the extremities of the rod 424 move.

For each flap 410a-b, the mechanism 420 comprises at least one arm 428 (here three), wherein a first extremity of the arm 428 is rotatably mounted on the flaps 410a-b around a first articulation axis parallel to the rotation axis 412 and wherein a second extremity of the arm 428 is rotatably mounted on the rod 424 around a second articulation axis parallel to the rotation axis 412. The first extremity of the arm 428 is fixed near the distal end of the flaps 410a-b.

According to direction of the movement of the rod 424, the arms 428 pull or push the flaps 410a-b.

The actuator 422 can be for example a cylinder or a motor. As the movement of the rod 424 is a translation and not a rotation, the actuator 422 can be moved away from the rod 424, and especially, it can be set backwards in respect to the cold regulating valve 318 avoiding the disturbance of the air flow in the fan duct 74.

In addition, the actuator 422 can be located just below a faring 76 to have an easy access for maintenance.

To limit the pressure drops at the trailing edges of the flaps 410a-b in the open position, the cold regulating valve 318 comprises an aerodynamic element 430 fixed to the open frame 402 through the window 401 and just after the trailing edges of the flaps 410a-b in the open position. The aerodynamic element 430 plays the role of a trailing edge.

## Claims

1. Regulating valve (318) for a heat exchanger system (500) of an aircraft (10) propulsion system (15), said propulsion system (15) comprising a turbojet with a fan duct (74), and the heat exchanger system (500) comprising a second supply pipe (516) which bleeds cold air from the fan duct (74), and wherein the regulating valve (318) has a front side (404) intended to be oriented towards a front of the fan duct (74), and a back side (406) intended to be oriented towards the second supply pipe (516) and includes:
- an open frame (402) which delimits a window (401) and is intended to be set in position in front of the second supply pipe (516),
- two flaps (410a-b) extending between a proximal end and a distal end, wherein the proximal end of each flap (410a-b) is rotatably mounted on the open frame (402) around a same rotation axis (412) located at the front side (404), wherein the flaps (410a-b) are mobile in rotation between a closed position in which each flap (410a-b) closes half of the window (401) and an open position in which each flap is retracted in order to open half of the window (401),
- a mechanism (420) linked to the flaps (410a-b), wherein the mechanism (420) is mobile between a first position and a second position, and wherein the mechanism (420) moves the flaps (410a-b) from the closed position to the open position when it moves from the first position to the second position and vice versa, and
- an actuator (422) acting on the mechanism (420) to move it from the first position to the second position and vice versa.

2. Regulating valve (318) according to Claim 1, **characterized in that** the mechanism (420) is located at the back of the flaps (41 0a-b) and between the flaps (41 0a-b) in the open position.

3. Regulating valve (318) according to Claim 2, **characterized in that** it comprises an aerodynamic element (430) fixed to the open frame (402) through the window (401) and just after trailing edges of the flaps (410a-b) in the open position.

4. Regulating valve (318) according to one of Claims 1 to 3, **characterized in that**, between the proximal end and the distal end, each flap (410a-b) presents an external face in contact with the cold air flow (75) of the fan duct (74), and **in that** the external face (414) is convex.

5. Regulating valve (318) according to one of claims 1 to 4, **characterized in that** the mechanism (420) comprises:
- a rod (424) linked to the actuator (422) and parallel to the rotation axis (412), wherein the rod (424) is mobile in translation with respect to the frame (402) according to a direction of translation parallel to a direction extending between the front side (404) and the back side (406), and
- for each flap (410a-b), at least one arm (428), wherein a first extremity of the arm (428) is rotatably mounted on the flap (410a-b) around a first articulation axis parallel to the rotation axis (412) and wherein a second extremity of the arm (428) is rotatably mounted on the rod (424) around a second articulation axis parallel to the rotation axis (412).

6. Heat exchanger system (500) of an aircraft (10) propulsion system (15), said propulsion system (15) comprising a turbojet with a fan duct (74), and said heat exchanger system (500) comprising a heat exchanger (502) and a second supply pipe (516) which is intended to bleed cold air to the heat exchanger (502) from the fan duct (74) through a regulation valve (318) according to one of Claims 1 to 5.

7. Aircraft propulsion system (15) comprising a turbojet with a fan duct (74) and a heat exchanger system (500) according to Claim 6.

8. Aircraft (10) including at least one propulsion system (15) according to Claim 7.
